# EUROPEAN PATENT APPLICATION

(11) **EP 4 151 064 A1**
(43) Date of publication of application: **22.03.2023**
(21) Application number: 22194174.3
(22) Date of filing: 06.09.2022
(51) Int. Cl.: A01B 69/04, A01B 79/00

(54) **AGRICULTURAL MACHINE**

(30) Priority: 16.09.2021 JP 2021151093
(71) Applicant: Yanmar Holdings Co., Ltd., Osaka-shi, Osaka (JP)
(72) Inventor: YUKI, Hidehiro, Osaka (JP); UEDA, Ryohei, Okayama (JP)
(74) Representative: Novagraaf International SA

(57) **Abstract**

[Problem] An agricultural machine can prevent operators from making operational mistakes related to the start of a work, and from forgetting to perform the operation.

[Solution] A display section 5 displays information related to a plurality of fields. The operating section 7 accepts a selection operation for one of the plurality of fields displayed on the display section 5. If the operating section 7 accepts a selection operation for the one field, and if the position information acquired by the positioning unit 4 corresponds to a position within the one field, the control section 21 controls the display section 5 to display a start button 201 for starting the operation of the fertilizing apparatus 3. If an operation to the start button 201 is accepted by the operating section 7, the control section 21 starts the operation of the fertilizing apparatus 3, based on the work information for the one field stored in the storage section 22.

## Description

### TECHNICAL FIELD

The present invention relates to an agricultural machine.

### BACKGROUND ART

Conventionally, technologies for displaying work information related to a field are known (see, for example, Patent Document 1).

### PRIOR ART DOCUMENT

### PATENT DOCUMENT

Patent Document 1: Japanese Unexamined Patent Application Publication No. 2015-49871

### SUMMARY OF INVENTION

### TECHNICAL PROBLEM

For example, when performing fertilizer application, an operator performs an operation to start a fertilizing apparatus mounted on an agricultural machine and then drives the agricultural machine in the field. In this case, the operator could make an operational error or forget the operation. If the operator makes an operational mistake or forgets to perform the operation, the agricultural machine will travel through the field without performing the fertilizer application.

An object of the present invention is to provide an agricultural machine that can prevent operators from making operational mistakes related to the start of a work, and from forgetting to perform the operation.

### SOLUTION TO PROBLEM

An agricultural machine according to the present invention includes a traveling section, a position acquisition section, a work section, a storage section, a display section, an operating section, and a control section. The position acquisition section is located in the traveling section and acquires position information. The work section is supported by the traveling section and works in the field. The storage section stores work information related to each of a plurality of fields, the plurality of fields including the field. The display section displays information related to a plurality of fields. The operating section accepts a selection operation for one of the plurality of fields displayed on the display section. The control section, if the operating section accepts the selection operation for the one field, and if the position information acquired by the position acquisition section corresponds to a position within the one field, causes the display section to display an work start notification screen for starting a work of the work section. If the operating section accepts a start operation, the control section causes the work section to start working based on work information related to the one field stored in the storage section.

### ADVANTAGEOUS EFFECTS OF INVENTION

The present invention provides an agricultural machine that can prevent operators from making operational mistakes related to the start of a work and from forgetting to perform the operation.

### BRIEF DESCRIPTION OF THE DRAWINGS

FIG. 1 is a left side view illustrating a rice transplanter according to a first embodiment.
FIG. 2 is a block diagram illustrating a configuration of the rice transplanter according to the first embodiment.
FIG. 3 illustrates exemplary supply amount planning information according to the first embodiment.
FIG. 4 is a flowchart illustrating an exemplary operation of the rice transplanter at the start of a work according to the first embodiment.
FIG. 5 illustrates an exemplary field list screen in the first embodiment.
FIG. 6 illustrates an exemplary work start notification screen in the first embodiment.
FIG. 7 is a flowchart illustrating an exemplary operation of the rice transplanter during work according to the second embodiment.
FIG. 8 illustrates an exemplary work end notification screen in the second embodiment.
FIG. 9 is a flowchart illustrating an exemplary operation of the rice transplanter during work according to the third embodiment.
FIG. 10 illustrates an exemplary working state screen in a modification example according to the third embodiment.

### DESCRIPTION OF EMBODIMENTS

Embodiments of the present invention are described with reference to the drawings. Note that, in the drawings, the same reference signs are used for the same or equivalent components, and redundant descriptions are omitted.

### <First Embodiment>

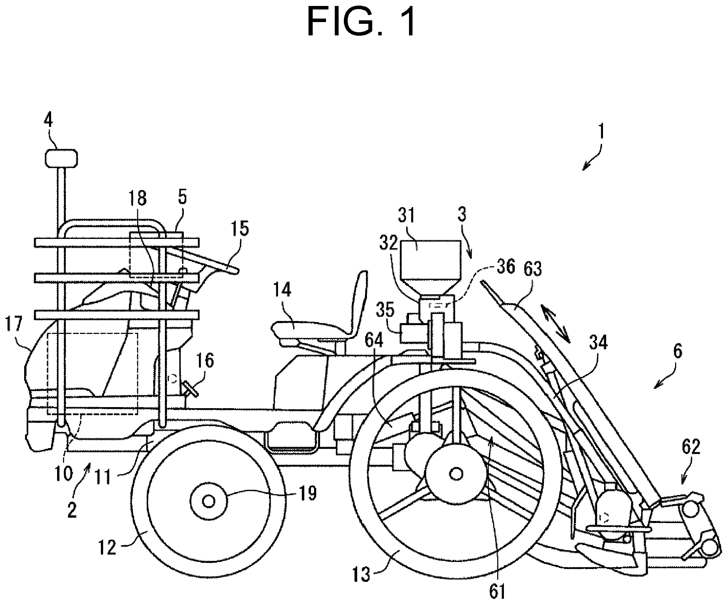

Referring to FIGS. 1 to 6, the rice transplanter 1 according to the first embodiment is described. FIG. 1 is a left side view of the rice transplanter 1 according to the first embodiment. The rice transplanter 1 is an exemplary agricultural machine. In the first embodiment, the direction of travel of the rice transplanter 1 is to the left on the paper on which FIG. 1 is drawn. In the following description, the left side of the rice transplanter 1 with respect to the direction of travel may be referred to as left, and the right side of the rice transplanter 1 with respect to the direction of travel as right.

As illustrated in FIG. 1, the rice transplanter 1 includes a traveling section 2, a fertilizing apparatus 3, a positioning unit 4, a display section 5, a planting section 6, an engine 10, a mission case 11, front wheels 12, rear wheels 13, a driver's seat 14, a steering wheel 15, a pedal 16, a hood 17, and a dashboard 18.

The traveling section 2 is configured as a vehicle body of the rice transplanter 1. The traveling section 2 travels through the field by power from the engine 10.

The front wheels 12 and the rear wheels 13 support the traveling section 2.

The front wheels 12 are provided in pair to the traveling section 2 on the right and left of the traveling section 2, and the rear wheels 13 are provided in pair to the traveling section 2 on the right and left of the traveling section 2. In the first embodiment, a vehicle speed sensor 19 is located on an axle of front wheels 12. The vehicle speed sensor 19 detects a travel speed of the traveling section 2 by detecting rotation of the axle. The vehicle speed sensor 19 may be located in a different position from on the front wheel 12.

The engine 10 is supported on a front side of the traveling section 2. The engine 10 is covered by the hood 17. The hood 17 is configured to be openable and closable. The engine 10 serves as a power source for driving the rice transplanter 1.

The power of engine 10 is input to mission case 11. The power of the engine 10 is shifted by the mission case 11 and transmitted to the front wheels 12 and the rear wheels 13. The power of the engine 10 is also transmitted to the planting section 6 via the mission case 11.

An operator of the rice transplanter 1 is seated on the driver's seat 14. The driver's seat 14 is provided between the front wheels 12 and the rear wheels 13 in a front-back direction of the traveling section 2. The dashboard 18 and the display section 5 are located in front of the driver's seat 14. The steering wheel 15 is provided on the dashboard 18.

The display section 5 is configured, for example, by a display such as a liquid crystal display or an organic electro luminescence (EL) display. The display section 5 may alternatively be configured by a touch panel integrated into a surface of a liquid crystal display, or the like. The touch panel is an example of an operating section 7 that accepts operators' operations. The operating section 7 may be a hard switch, a hard button, or the like, and is not limited to a touch panel.

In the first embodiment, the display section 5 is attached to a right side of the steering wheel 15 by a retainer (not illustrated). The position of the display section 5 is not limited to as described above, as long as the display section 5 is located in a position that is visible to the operator seated in the driver's seat 14.

The steering wheel 15 is mounted on a steering column placed in front of the driver's seat 14. The operator can instruct the traveling section 2 to go straight and turn by holding and turning the steering wheel 15 by hand.

The pedal 16 is provided projecting upward from the floor on a front side of the driver's seat 14. By stepping on the pedal 16 with a foot, the operator operates the pedal 16. The pedal 16 is also provided with a return spring (not illustrated) to return the pedal 16 when the operator releases the step on the pedal 16.

The operator instructs the traveling section 2 to travel by stepping on the pedal 16 with a foot. Specifically, the operator instructs the traveling section 2 to increase or decrease the speed by changing a depth at which the pedal 16 is depressed with the foot. On the other hand, by removing a foot from the pedal 16, the operator instructs the traveling section 2 to stop traveling.

The planting section 6 is disposed behind the traveling section 2. The planting section 6 plants the seedlings in the field. The planting section 6 is coupled to the traveling section 2 via an elevating link mechanism 61. The planting section 6 includes, for example, a planting unit 62 and a seedling platform 63. Seedling mats are placed on the seedling platform 63. Seedlings arranged on the seedling mats placed on seedling platform 63 are fed to the planting unit 62. The planting unit 62 plants seedlings in the field.

An elevating cylinder 64 is located in the traveling section 2. By telescopically driving the elevating cylinder 64, the planting section 6 can be raised and lowered vertically with respect to the traveling section 2.

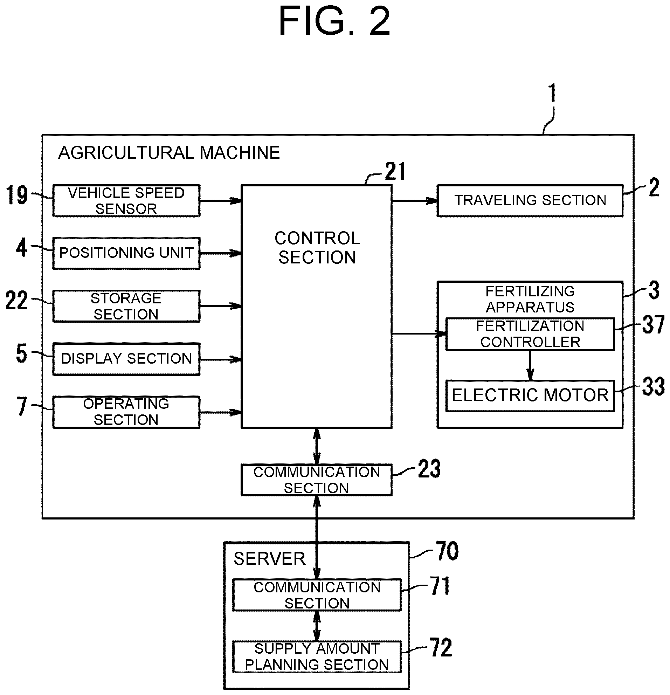

The fertilizing apparatus 3 has fertilizer tanks 31, a delivery section 32, an electric motor 33 (see FIG. 2), a conveying hose 34, a blower 35, a deliverer 36, and a fertilization controller 37 (see FIG. 2). In the first embodiment, the fertilizing apparatus 3 includes a plurality of fertilizer tanks 31 and the same number of delivery sections 32 as the fertilizer tanks 31. The fertilizing apparatus 3 is an example of a work section that is supported by the traveling section 2 and works in the field to perform an operation to supply agricultural materials to the field.

The fertilizer tanks 31 are located between the driver's seat 14 and the seedling platform 63 in the front-back direction of the traveling section 2. In the first embodiment, the fertilizer tanks 31 store, for example, fertilizer in powdery or granular form. Powdered and granular fertilizers are examples of agricultural materials.

The delivery section 32 is connected to a lower part of the fertilizer tank 31. The delivery section 32 discharges downwards a predetermined amount of fertilizer supplied by the fertilizer tank 31.

A pathway through which fertilizer can pass is located inside the delivery section 32 (not illustrated). A deliverer 36 having a substantial disc shape is provided rotatably in the above pathway. That is, the delivery section 32 contains the deliverer 36. The deliverer 36 has a plurality of delivery recesses that can accommodate a predetermined amount of fertilizer (not illustrated). By rotating the deliverer 36, the fertilizer contained in the delivery recesses is discharged downstream in the pathway.

The electric motor 33 serves as a driving source to rotate the deliverer 36 of the delivery section 32. The electric motor 33 is attached to the fertilizing apparatus 3 at an appropriate position.

The conveying hose 34 is connected downstream of the pathway located inside the delivery section 32. The conveying hose 34 is a flexible, elongated tubular member.

The blower 35 is located at an appropriate position in close proximity to the delivery section 32. The blower 35 generates airflow and delivers the airflow to the internal pathway of the delivery section 32. As a result, the fertilizer, discharged downstream of said pathway, is fed (applied) to the field through the conveying hose 34.

The fertilization controller 37 controls the electric motor 33 to change the operating speed of the deliverer 36, thereby changing the amount of fertilizer discharged into the conveying hose 34 per unit time.

The positioning unit 4 acquires position information indicating the position of the rice transplanter 1. The positioning unit 4 includes, for example, a positioning antenna and a position information receiver. The positioning antenna receives a signal from a positioning satellite that configures a positioning system such as the Global Navigation Satellite System (GNSS). A positioning signal received by the positioning antenna is input to the position information receiver. The position information receiver processes the input positioning signals to obtain position information indicating the position of the rice transplanter 1. The positioning unit 4 is an example of a position acquisition section that is located in the traveling section 2 and acquires position information.

FIG. 2 is a block diagram illustrating a configuration of the rice transplanter 1 according to the first embodiment. The rice transplanter 1 includes a control section 21, a storage section 22, and a communication section 23, in addition to the traveling section 2, the fertilizing apparatus 3, the positioning unit 4, the display section 5, the operating section 7, the vehicle speed sensor 19, and the like.

The control section 21 includes a processor such as, for example, a central processing unit (CPU). The processor executes a computer program stored in the storage section 22 to perform various processes specified in the computer program. Details of the control section 21 are discussed below.

For example, the storage section 22 includes a memory, such as a read only memory (ROM), a random access memory (RAM), a hard disk drive (HDD), or a solid state drive (SSD). The storage section 22 stores computer programs to be executed by the control section 21. The storage section 22 also stores work information related to each of the plurality of fields. The work information includes, for example, position information of a field, a name of the field, and supply amount planning information of the field. The supply amount planning information is discussed below.

The communication section 23 communicates wirelessly with a communication section 71 included in a server 70. The communication section 23 receives, from the communication section 71, supply amount planning information created by a supply amount planning section 72 included in the server 70, and outputs the supply amount planning information to the control section 21. The control section 21 stores the supply amount planning information received by the communication section 23 from the server 70, in the storage section 22.

The server 70 includes the communication section 71 and the supply amount planning section 72. The communication section 71 communicates wirelessly with the communication section 23 included in the rice transplanter 1. The communication section 71 transmits the supply amount planning information created by the supply amount planning section 72 to the communication section 23.

The supply amount planning section 72 creates supply amount planning information that specifies a planned supply amount of agricultural materials to be supplied to each of a plurality of zones (meshes) of a field. That is, the supply amount planning information includes position information indicating a plurality of zones set by dividing the field, and a supply amount (planned supply amount) specified for each zone. The supply amount planning section 72 may create the supply amount planning information by using any known techniques. For example, the supply amount planning section 72 determines the planned supply amount of fertilizer supply for each zone based on the soil fertility, the previous year's harvest, and the like.

The control section 21 illustrated in FIG. 2 is configured to store supply amount planning information received from server 70, in the storage section 22, but is not limited to this configuration. For example, the control section 21 may read the supply amount planning information stored in a storage medium such as a universal serial bus (USB) memory, and store the supply amount planning information in the storage section 22. For example, the rice transplanter 1 may have an equivalent function to that of the supply amount planning section 72, and supply amount planning information created by the rice transplanter 1 may be stored in the storage section 22.

The server 70 may store work information related to each of the plurality of fields.

The server 70 may transmit work information to the rice transplanter 1 via the communication section 71 upon request from the rice transplanter 1. The control section 21 receives work information from the rice transplanter 1 via the communication section 23 before the start of the field operation and stores the received work information in the storage section 22.

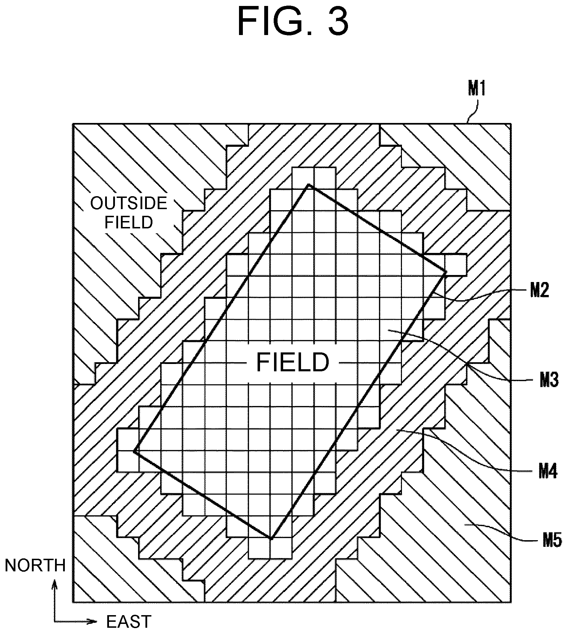

FIG. 3 illustrates an example of supply amount planning information M1 in the first embodiment. One piece of supply amount planning information M1 is created for one field. The supply amount planning information M1 illustrated in FIG. 3 is set to an in-field area M2, which corresponds to the area of the field. A fertilizer application map M3 is configured to encompass the in-field area M2. The fertilizer application map M3 is a map that specifies an amount of fertilizer, an example of agricultural material, to be applied to each zone indicated by a square box (planned supply amount). The fertilizing apparatus 3 supplies agricultural materials to a zone which corresponds to a position of the rice transplanter 1 detected by the positioning unit 4, in accordance with a planned supply amount determined for that zone.

The average fertilizer amount application area M4 is set outside of the in-field area M2, i.e., outside of the fertilizer application map M3. For the average fertilizer amount application area M4, an average of the planned supply amount for all zones of the fertilizer application map M3 is set, for example. If the positioning accuracy of positioning unit 4 is low, the traveling section 2, actually located in the in-field area M2, may be misdetected as being located in the average fertilizer amount application area M4. Even in such a case, the average fertilizer amount application area M4 is set so that the fertilizing apparatus 3 can supply agricultural materials to the field. Thus, the average fertilizer amount application area M4 is actually outside the field, however is treated as being inside the field for the purpose of controlling the fertilizing apparatus 3.

An out-of-field area M5 is set outside the average fertilizer amount application area M4. The out-of-field area M5 is actually outside the field and is also treated as being outside the field for the purpose of controlling the fertilizing apparatus 3. Outside of the supply amount planning information M1 is also treated as being out-of-field, just as the out-of-field area M5.

An operation of the rice transplanter 1 is explained as follows, using variable fertilizer application as an example.

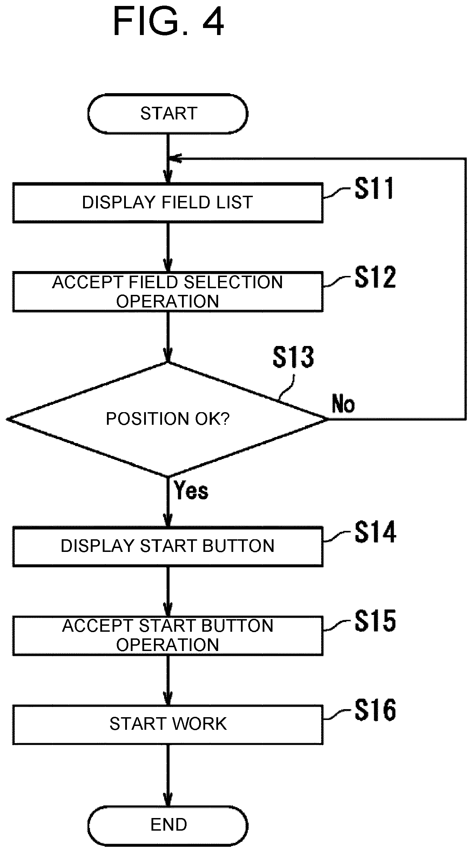

FIG. 4 is a flowchart illustrating an exemplary operation of the rice transplanter 1 at the start of a work according to the first embodiment. In step S11, the control section 21 displays a field list screen on the display section 5.

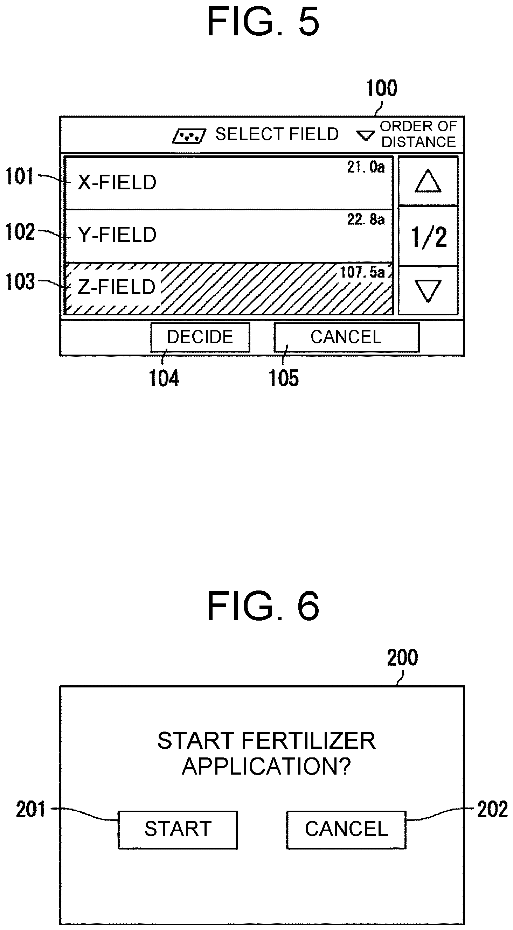

FIG. 5 illustrates an example of a field list screen 100 in the first embodiment. The control section 21 uses the work information related to each of the plurality of fields stored in storage section 22 to generate the field list screen 100, which lists the plurality of fields. In the illustrated example, the fields are listed in order of proximity to the current position of the traveling section 2. That is, an X-field button 101 which is the closest to the current position of the rice transplanter 1, a second closest Y-field button 102, and a third closest Z-field button 103 are listed. Note that since variable fertilizer application has already been completed only for a Z field, the display mode of the Z-field button 103 is different from that of the other buttons 101 and 102.

The operator selects and operates the button corresponding to the field for which variable fertilizer application is to be performed, and presses a decide button 104. The operating section 7 outputs operation content performed by the operator, to the control section 21. If the operator presses a cancellation button 105, the screen returns to the screen that was displayed on the display section 5 before the field list screen 100 was displayed, for example.

In step S12 of FIG. 4, the operating section 7 accepts an operation to select one field from the plurality of fields displayed on the display section 5. The operating section 7 outputs the accepted operation content to the control section 21.

In step S13, when the operating section 7 accepts a selection operation for one field, the control section 21 determines whether or not the position information of the rice transplanter 1 detected by the positioning unit 4 corresponds to a position in the one field.

For example, when the operator performs an operation to select an X field, the control section 21 refers to the supply amount planning information M1 for the X field stored in the storage section 22, to determine whether or not the rice transplanter 1 is located in the in-field area M2. The following description assumes that the one field selected by the operator is the X field.

If the position of the rice transplanter 1 does not correspond to a position in the X field (step S13; No), the processing of the control section 21 returns to step S11. The control section 21 then prompts the operator to reselect a field from the field list screen 100, which is closer to the current position. Alternatively, the control section 21 may display a warning, such as "outside the selected field", on the display section 5 if the position of the rice transplanter 1 does not correspond to a position in the X field (step S13; No). Alternatively, the control section 21 may remain in place if the position of the rice transplanter 1 does not correspond to a position in the X field (step S13; No), and wait until the position information of the rice transplanter 1 detected by the positioning unit 4 is in the X field.

If the position of the rice transplanter 1 corresponds to a position in the X field (step S13; Yes), the processing of the control section 21 proceeds to step S14. In step S14, the control section 21 displays a work start notification screen including a start button for starting the operation of the fertilizing apparatus 3, on the display section 5.

FIG. 6 illustrates an example of a work start notification screen 200 in the first embodiment. The work start notification screen 200 is a screen used to inform an operator to perform an operation to start working the fertilizing apparatus 3. The work start notification screen 200 includes a start button 201 for starting operating the fertilizing apparatus 3 and a cancellation button 202 for returning to the previous screen. The operator presses the start button 201 for starting variable fertilizer application in the X field.

In step S15 of FIG. 4, the operating section 7 accepts an operation on the start button 201 in the work start notification screen 200. The operating section 7 outputs the accepted operation content to the control section 21. The operation on the start button 201 corresponds to a start operation. In this example, a touch panel making up the operating section 7 is configured to accept the start operation, however, the operating section 7 may accept the start operation using a hard switch, a hard button, or the like.

As a specific example, if the planting clutch is operated "in" while the work start notification screen 200 is displayed, the control section 21 treats this operation as a start operation. Thus, in addition to the operation on the start button 201, the control section 21 can also start fertilizer application by accepting an operation to start a predetermined operation (e.g., planting) that is different from the fertilizer application.

In step S16, when the operating section 7 accepts the operation on the start button 201, the control section 21 starts the operation of the fertilizing apparatus 3, based on the supply amount planning information M1 for the X field stored in the storage section 22. Since the work start notification screen 200 is presented to an operator when the fertilizing apparatus 3 needs to start working, it is possible to prevent the operator from making an operational mistake related to the start of variable fertilizer application or forgetting to perform the operation.

Next, the variable fertilizer application performed by fertilizing apparatus 3 is described. The control section 21 instructs the fertilization controller 37 to start the variable fertilizer application in step S16. The control section 21 then outputs, to the fertilization controller 37, a travel speed of the traveling section 2 detected by the vehicle speed sensor 19 and the planned supply amount of the supply amount planning information M1 corresponding to the position of the rice transplanter 1 detected by the positioning unit 4. Alternatively, when the fertilization controller 37 accepts an instruction to start variable fertilizer application, the fertilization controller 37 may directly acquire the position information from the positioning unit 4 without going through the control section 21, and acquire the planned supply amount of the supply amount planning information M1 corresponding to the acquired position, from the storage section 22.

If the travel speed of the traveling section 2 is fast, the fertilization controller 37 controls the electric motor 33 to increase the operating speed of the deliverer 36, thereby increasing the amount of fertilizer discharged into the conveying hose 34 per unit time. In addition, the fertilization controller 37 increases or decreases the operating speed of the deliverer 36 according to the planned supply amount based on the supply amount planning information M1. On the other hand, if the travel speed of traveling section 2 is slow, the fertilization controller 37 controls the electric motor 33 to decrease the operating speed of the deliverer 36, thereby decreasing the amount of fertilizer discharged into the conveying hose 34 per unit time. In addition, the fertilization controller 37 increases or decreases the operating speed of the deliverer 36 according to the planned supply amount based on the supply amount planning information M1. This allows the fertilizing apparatus 3 to change the amount of fertilizer per zone to be applied to the X field, based on the supply amount planning information M1, regardless of the travel speed of the traveling section 2.

As explained above with reference to FIGS. 1 to 6, the rice transplanter 1 includes the traveling section 2, the positioning unit 4, the fertilizing apparatus 3, the storage section 22, the display section 5, the operating section 7, and the control section 21. The positioning unit 4 is placed in the traveling section 2 to acquire position information. The fertilizing apparatus 3 is supported by the traveling section 2 and operates in the field. The storage section 22 stores work information for each of the plurality of fields. The display section 5 displays information related to a plurality of fields. The operating section 7 accepts a selection operation for one of the plurality of fields displayed on the display section 5. If the operating section 7 accepts the selection operation for one field, and if the position information acquired by the positioning unit 4 corresponds to a position within the one field, the control section 21 controls the display section 5 to display the work start notification screen 200 for starting the operation of the fertilizing apparatus 3. When the start operation is accepted by the operating section 7, the control section 21 starts the operation of the fertilizing apparatus 3, based on the work information for the one field stored in the storage section 22. Thus, the rice transplanter 1 presents the work start notification screen 200 to the operator in situations where the fertilizing apparatus 3 needs to start working, thus preventing the operator from making an operational mistake related to the start of the work, and from forgetting to perform the operation, thereby ensuring the operation to be started.

The rice transplanter 1 can also confirm that the field selected by the operator matches the field where the traveling section 2 is actually located. This prevents an operator from making an operational mistake related to the start of the work when the content of work varies from field to field, such as in the variable fertilizer application.

### <Second Embodiment>

The rice transplanter 1 according to the second embodiment has the same configuration as the rice transplanter 1 according to the first embodiment illustrated in FIGS. 1 and 2, so FIGS. 1 and 2 will be used as references below.

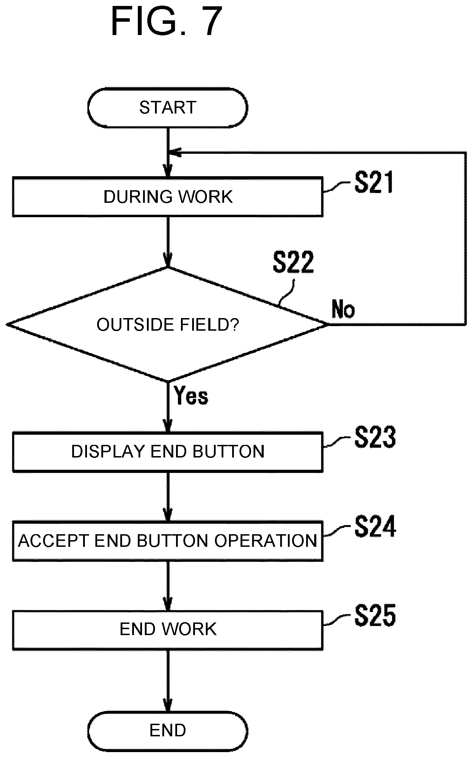

FIG. 7 is a flowchart illustrating an exemplary operation of the rice transplanter 1 during work according to the second embodiment. The rice transplanter 1 started work in step S16 of FIG. 4 and is continuing the work in step S21 of FIG. 7. For example, the fertilization controller 37 controls the operation of the fertilizing apparatus 3, based on the supply amount planning information M1 for the X field, to perform variable fertilizer application.

In step S22, the control section 21 determines whether the position information of the rice transplanter 1 acquired by the positioning unit 4 corresponds to a position outside the X field. Specifically, the control section 21 refers to the supply amount planning information M1 for the X field stored in the storage section 22, and determines that the traveling section 2 is located outside the X field if the traveling section 2 is located either within the out-of-field area M5 or outside the supply amount planning information M1.

If the position of the rice transplanter 1 does not correspond to a position outside the X field (step S22; No), i.e., the position of the rice transplanter 1 corresponds to a position within the X field, the control section 21 determines that the variable fertilizer application in the X field continues. Therefore, the processing of the control section 21 returns to step S21.

If the position of the rice transplanter 1 corresponds to a position outside the X field (step S22; Yes), the control section 21 determines that the variable fertilizer application in the X field has been completed and the rice transplanter 1 has moved to outside the X field. Then, the processing of the control section 21 proceeds to step S23. In step S23, the control section 21 displays, on the display section 5, a work end notification screen including an end button for ending the operation of the fertilizing apparatus 3.

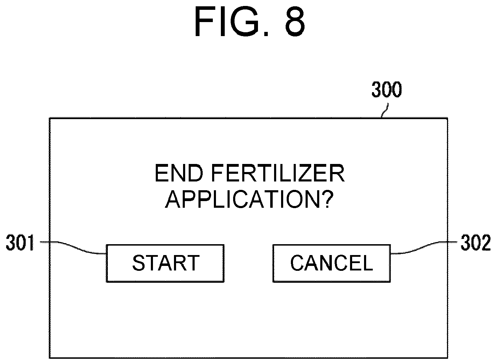

FIG. 8 illustrates an example of a work end notification screen 300 in the second embodiment. The work end notification screen 300 is a screen used to inform the operator to perform an operation to end the work of the fertilizing apparatus 3. The work end notification screen 300 includes an end button 301 for ending the operation of the fertilizing apparatus 3 and a cancellation button 302 for returning to the previous screen. The operator presses the end button 301 for ending the variable fertilizer application in the X field.

In step S24 of FIG. 7, the operating section 7 accepts an operation on the end button 301 in the work end notification screen 300. The operating section 7 outputs the accepted operation content to the control section 21. The operation on the end button 301 corresponds to an end operation. In this example, a touch panel making up the operating section 7 is configured to accept the end operation, however, the operating section 7 may accept the end operation using a hard switch, a hard button, or the like.

In step S25, the control section 21 ends the operation of the fertilizing apparatus 3 if the operating section 7 accepts the operation on the end button 301. That is, the fertilization controller 37 stops the operation of the electric motor 33. Since the work end notification screen 300 is presented to an operator when the fertilizing apparatus 3 needs to end the work, it is possible to prevent the operator from making an operational mistake related to the end of variable fertilizer application or forgetting to perform the operation.

As explained above with reference to FIGS. 7 and 8, when the control section 21 controls the operation of the fertilizing apparatus 3 based on the work information related to one field, if the position information acquired by the positioning unit 4 corresponds to a position outside the one field, the control section 21 displays, on the display section 5, the work end notification screen 300 for ending the operation of the fertilizing apparatus 3. The control section 21 ends the operation of the fertilizing apparatus 3 when the end operation is accepted by the operating section 7. Thus, the rice transplanter 1 presents the work end notification screen 300 to the operator in situations where the fertilizing apparatus 3 needs to end the work, thus preventing the operator from making an operational mistake related to the end of the work, and from forgetting to perform the operation, thereby ensuring the operation to be ended.

### <Third Embodiment>

The rice transplanter 1 according to the third embodiment has the same configuration as the rice transplanter 1 according to the first embodiment illustrated in FIGS. 1 and 2, so FIGS. 1 and 2 will be used as references below.

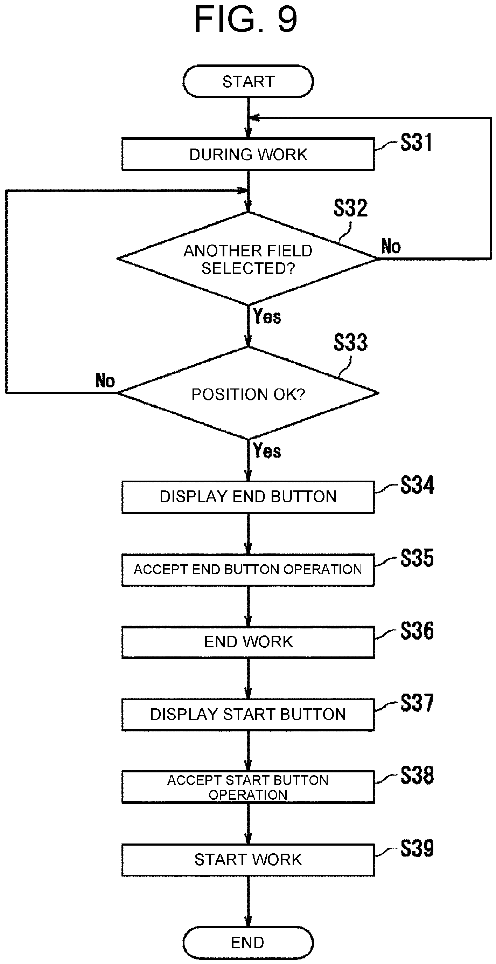

FIG. 9 is a flowchart illustrating an exemplary operation of the rice transplanter 1 during work according to the third embodiment. The rice transplanter 1 started work in step S16 of FIG. 4 and is continuing the work in step S31 of FIG. 9. For example, the fertilization controller 37 controls the operation of the fertilizing apparatus 3, based on the supply amount planning information M1 for the X field, to perform variable fertilizer application.

For example, suppose that the control section 21 controls the operation of the fertilizing apparatus 3, based on the supply amount planning information M1 for the X field (step S31), and the operator has finished the variable fertilizer application in the X field and moved to another field (e.g., the Y field). In this case, the operator performs an operation on the operating section 7 to display the field list screen 100 (see FIG. 5) on the display section 5. The operator then operates to select a Y-field button 102 and presses a decide button 104. The operating section 7 outputs the accepted operation content to the control section 21.

In step S32, the control section 21 determines whether the operating section 7 has accepted a selection operation for a Y field different from the X field. If the operating section 7 has not accepted the selection operation for the Y field (step S32; No), the control section 21 determines that the variable fertilizer application in the X field continues. Therefore, the processing of the control section 21 returns to step S31.

If the operating section 7 accepts the selection operation for the Y field different from the X field (step S32; Yes), the control section 21 determines that the variable fertilizer application for the X field is finished and the rice transplanter 1 has moved or will move to the Y field, which is the next target for the work. Then, the processing of the control section 21 proceeds to step S33.

In step S33, if the operating section 7 accepts a selection operation for the Y field different from the X field, the control section 21 determines whether or not the position information of the rice transplanter 1 detected by the positioning unit 4 corresponds to a position in the Y field. Specifically, the control section 21 refers to the supply amount planning information M1 for the Y field stored in the storage section 22, to determine whether or not the traveling section 2 is located in the in-field area M2.

If the position of the rice transplanter 1 does not correspond to a position in the Y field (step S33; No), the processing of the control section 21 returns to step S32. The control section 21 then prompts the operator to reselect a field from the field list screen 100, which is closer to the current position. Alternatively, the control section 21 may display a warning, such as "outside the selected field", on the display section 5, if the position of the rice transplanter 1 does not correspond to a position in the Y field (step S33; No). Alternatively, the control section 21 may remain in place if the position of the rice transplanter 1 does not correspond to a position in the Y field (step S33; No), and wait until the position information of the rice transplanter 1 detected by the positioning unit 4 is in the Y field.

If the position of the rice transplanter 1 corresponds to a position outside the Y field (step S33; Yes), the control section 21 determines that the variable fertilizer application in the X field has been completed and the rice transplanter 1 has moved to outside the Y field. Then, the processing of the control section 21 proceeds to step S34. In step S34, the control section 21 displays, on the display section 5, the work end notification screen 300 including the end button 301 for ending the operation of the fertilizing apparatus 3 (refer to Fig. 8).

The processing for steps S35 and S36 is the same as the processing for steps S24 and S25 in FIG. 7.

In step S37, the control section 21 displays the work start notification screen 200 including the start button 201 for starting the operation of the fertilizing apparatus 3, on the display section 5 (see FIG. 6).

In step S38, the operating section 7 accepts an operation on the start button 201 in the work start notification screen 200. The operating section 7 outputs the accepted operation content to the control section 21.

In step S39, when the operating section 7 accepts the operation on the start button 201, the control section 21 starts the operation of the fertilizing apparatus 3, based on the supply amount planning information M1 for the Y field stored in the storage section 22.

As explained above with reference to FIG. 9, when the control section 21 controls the operation of the fertilizing apparatus 3 based on the work information related to one field, if the operating section 7 accepts a selection operation for another field different from the one field among the plurality of fields and if the position information acquired by the positioning unit 4 corresponds to a position outside the another field, the control section 21 displays, on the display section 5, the work end notification screen 300 for ending the operation of the fertilizing apparatus 3. The control section 21 ends the operation of the fertilizing apparatus 3 when the end operation is accepted by the operating section 7. Thus, the rice transplanter 1 presents the work end notification screen 300 to the operator in situations where the fertilizing apparatus 3 needs to end the work, thus preventing the operator from making an operational mistake related to the end of the work, and from forgetting to perform the operation, thereby ensuring the operation to be ended.

In addition to displaying the work end notification screen 300, the control section 21 displays the work start notification screen 200 on the display section 5. When the start operation is accepted by the operating section 7, the control section 21 starts the operation of the fertilizing apparatus 3, based on the work information for the another field stored in the storage section 22.

Thus, the rice transplanter 1 presents the work start notification screen 200 to the operator in situations where the fertilizing apparatus 3 needs to start working, thus preventing the operator from making an operational mistake related to the start of the variable fertilizer application, and from forgetting to perform the operation, thereby ensuring the operation to be started.

In the flowchart in FIG. 9, the control section 21 displays the work end notification screen 300 and thereafter displays the work start notification screen 200, however, a screen containing the contents of the work end notification screen 300 and of the work start notification screen 200 may be displayed at once. The control section 21 may alternatively display the work end notification screen 300 after displaying the work start notification screen 200.

Some embodiments of the present invention have been described with reference to the accompanying drawings (FIGS. 1 to 9). However, the present invention is not limited to the embodiments described above, and can be embodied in various modes in a range without departing from its spirit. Modification examples 1 to 4 are described below.

### <First modification example>

In a first modification example, an example of preventing operational errors related to work stoppage is described.

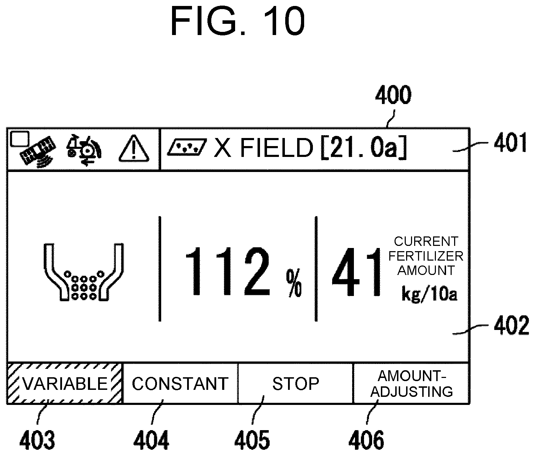

FIG. 10 illustrates an example of a working state screen 400 in the first modification example according to the third embodiment. In step S31, the control section 21 displays the working state screen 400 on the display section 5. The working state screen 400 contains information 401 on the X field where variable fertilizer application is being performed, information 402 indicating content of work such as a current amount of fertilizer applied, a variable button 403, a constant button 404, a stop button 405 and an amount-adjusting button 406. For example, if the operator performs an operation to select information 401 on the X field, the field list screen 100 (see FIG. 5) is displayed on the display section 5.

The variable button 403 is a button that switches the operation of the fertilizing apparatus 3 to the variable fertilizer application. Since the fertilizing apparatus 3 is currently performing the variable fertilizer application, the display mode of the variable button 403 is different from the display modes of the other buttons 404, 405, and 406. The constant button 404 switches the operation of the fertilizing apparatus 3 to a constant fertilizer application. In the constant fertilizer application, the fertilizing apparatus 3 applies the same amount of fertilizer to all zones within a field. The stop button 405 is a button for stopping the operation of the fertilizing apparatus 3. The amount-adjusting button 406 is a button that switches the operation of the fertilizing apparatus 3 to an amount-adjusting operation. In the amount-adjusting operation, the fertilizing apparatus 3 adjusts the amount of fertilizer that is discharged into the conveying hose 34.

For example, if the stop button 405 is pressed during variable fertilizer application in the X field, the control section 21 determines whether the position information of the rice transplanter 1 detected by positioning unit 4 corresponds to a position within X field. If the position of the rice transplanter 1 corresponds to a position within the X field, the control section 21 determines that the pressing of the stop button 405 is likely an operational error and the variable fertilizer application in the X field is not completed. The control section 21 then displays a screen or the like on the display section 5, to warn the operator about an operational error. This allows the rice transplanter 1 to prevent the operator from making an operational error.

The application of the first modification example is not limited to the third embodiment, but can also be applied to the first embodiment and the second embodiment.

### <Second modification example>

In the first to third embodiments, the variable fertilizer application performed by the fertilizing apparatus 3 is illustrated as an example of the operation performed by the work section, however, any other operations performed by any other components may be the operation performed by the work section. For example, the control section 21 may be configured to function as a work section. In this case, for example, the control section 21 will perform an operation to record the content of work, the progress of the work, and the date and time on which the work is performed. When the start button is pressed, the control section 21 starts recording the content of work to be performed on the field and other information, based on the work information for the field. The control section 21 also stops recording content of work and other information when the end button is pressed. Alternatively, when the control section 21 automatically switches from the operation on the previous field to the operation on the next field, as in the third embodiment, the control section 21 may stop recording the content of work, or the like, related to the previous field, and may start recording the content of work, or the like, related to the next field. The control section 21 stores the content of the work performed on the field, or the like, in the storage section 22.

For example, the control section 21 stores, for each field, information such as whether or not the variable fertilizer application has been completed for that field, in the storage section 22. Then, when the control section 21 displays the field list screen 100 (see FIG. 5) on the display section 5, the control section 21 performs the display by distinguishing between fields where variable fertilizer application has been completed and fields where variable fertilizer application has not been completed. In the field list screen 100 illustrated in FIG. 5, the Z-field button 103, for which the variable fertilizer application has been completed, and the X-field button 101 and the Y-field button 102, for which the variable fertilizer application has not been completed, are displayed in different display modes from each other.

### <Third modification example>

In the first to third embodiments, the control section 21 controls the entire rice transplanter 1 including the work section, however, the section controlling the work section and the section controlling the rice transplanter 1 may be separated from each other. For example, the rice transplanter 1 includes a work instruction section that instructs the content of work (such as amount of fertilizer applied) of the work section and a work control section that controls a work of the work section, apart from the control section 21 that controls the entire rice transplanter 1. The work instruction section instructs the work control section about the content and conditions related to the work, based on position information and information on field selection. The work control section controls the operation of the work machine, based on the instructions by the work instruction section and the state of the rice transplanter 1 (lever position and vehicle speed, etc.). The functions of the work instruction section and the work control section may be realized by a single controller or by two controllers.

### <Fourth modification example>

In the second embodiment and the third embodiment, instead of displaying the work end notification screen 300, the control section 21 may display a warning screen to warn the operator of having stepped out of the field.

In the above embodiments, the drawings are illustrated schematically, mainly illustrating the respective components for ease of understanding. Therefore, the thickness, length, etc. of each component illustrated in the drawings differ from the actual ones for the convenience of drawing.

### INDUSTRIAL APPLICABILITY

The present invention is applicable to agricultural machines such as rice transplanters and tractors.

### REFERENCE SIGNS LIST

1 Rice transplanter (agricultural machine)
2 Traveling section
3 Fertilizing apparatus (work section)
4 Positioning unit (Position acquisition section)
5 Display section
6 Planting section
7 Operating section
10 Engine
11 Mission case
12 Front wheel(s)
13 Rear wheel(s)
14 Driver's seat
15 Steering wheel
16 Pedal
17 Hood
18 Dashboard
19 Vehicle speed sensor
21 Control section
22 Storage section
23 Communication section
31 Fertilizer tank
32 Delivery section
33 Electric motor
34 Conveying hose
35 Blower
36 Deliverer
37 Fertilization controller
61 Elevating link mechanism
62 Planting unit
63 Seedling platform
64 Elevating cylinder
70 Server
71 Communication section
72 Supply amount planning section
100 Field list screen
101 X-field button
102 Y-field button
103 Z-field button
104 Decide button
105, 202, 302 Cancellation button
200 Work start notification screen
201 Start button
300 Work end notification screen
301 End button
400 Working state screen
401, 402 Information
403 Variable button
404 Constant button
405 Stop button
406 Amount-adjusting button
M1 Supply amount planning information
M2 In-field area
M3 Fertilizer application map
M4 Average fertilizer amount application area
M5 Out-of-field area

## Claims

1. An agricultural machine comprising:
a traveling section;
a position acquisition section that is located in the traveling section and acquires position information;
a work section that is supported by the traveling section and works in a field;
a storage section that stores work information related to each of a plurality of fields, the plurality of fields including the field;
a display section that displays information related to a plurality of fields; and
an operating section that accepts a selection operation for one of the plurality of fields displayed on the display section; and
a control section that, if the operating section accepts the selection operation for the one field, and if the position information acquired by the position acquisition section corresponds to a position within the one field, causes the display section to display a work start notification screen for starting a work of the work section, and if the operating section accepts a start operation, causes the work section to start working based on work information related to the one field stored in the storage section.

2. The agricultural machine according to Claim 1, wherein the control section, while controlling the work of the work section based on the work information related to the one field, if the position information acquired by the position acquisition section corresponds to a position outside the one field, causes the display section to display a work end notification screen for ending the work of the work section, and if the operating section accepts an end operation, causes the work section to end the work.

3. The agricultural machine according to Claim 1, wherein the control section, while controlling the work of the work section based on the work information related to the one field, if the operating section accepts a selection operation for another field different from the one field among the plurality of fields and if the position information acquired by the position acquisition section corresponds to a position in the another field, causes the display section to display a work end notification screen for ending the work of the work section, and if the operating section accepts an end operation, ends the work of the work section and causes the display section to display the work start notification screen, and if the operating section accepts a start operation, causes the work section to start working based on work information related to the another field stored in the storage section.

4. The agricultural machine according to any one of Claims 1 to 3, wherein
the work section performs a work to supply agricultural materials to the field, and
the storage section stores, as the work information, supply amount planning information that specifies a supply amount of the agricultural materials for each of a plurality of zones obtained by dividing the field.
